# EUROPÄISCHE PATENTANMELDUNG

(11) **EP 2 508 402 A1**
(43) Veröffentlichungstag der Anmeldung: **10.10.2012**
(21) Anmeldenummer: 12157832.2
(22) Anmeldetag: 02.03.2012
(51) Int. Cl.: B60W 10/196, B60W 30/18, B60K 6/48, B60W 20/00, F16H 63/30, B60K 6/365, F16D 57/04, B60T 1/087, B60K 6/38

(54) **Hybridantrieb für ein Fahrzeug**

(30) Priorität: 07.04.2011 DE 102011006940
(71) Anmelder: ZF Friedrichshafen AG, 88038 Friedrichshafen (DE)
(72) Erfinder: Eisele, Markus, 88048 Friedrichshafen (DE); Wiegand, Yvonne, 88079 Kressbronn (DE)

(57) **Zusammenfassung**

Es wird ein Hybridantrieb für ein Fahrzeug, mit einem Verbrennungsmotor (VM) und zumindest einer elektrischen Maschine (EM) sowie einem Getriebe (1) in Planetenbauweise vorgeschlagen, wobei als verschleißfreies Anfahrelement zumindest ein Retarder (2) vorgesehen ist, der mit dem Getriebe (1) verbunden ist.

## Beschreibung

Die vorliegende Erfindung betrifft einen Hybridantrieb für ein Fahrzeug gemäß der im Oberbegriff des Patentanspruches 1 näher definierten Art.

Aus der Fahrzeugtechnik sind Hybridantriebe für Fahrzeuge bekannt, bei denen ein Verbrennungsmotor und eine elektrische Maschine über einen hydrodynamischen Drehmomentwandler mit einem nachgeschalteten Getriebe gekoppelt sind. Ein derartiger Hybridantrieb umfasst somit ein Getriebe, eine elektrische Maschine und zumindest einen Drehmomentwandler. Diese Konfiguration benötigt einen erheblichen Bauraum, da neben der Elektromaschine zusätzlicher Bauraum auch für den Drehmomentwandler erforderlich ist. Dadurch wird auch das Gewicht des Hybridantriebes erhöht. Zudem ergeben sich auch funktionale Einschränkung und ein höherer Verbrauch.

Eine Hybridantriebskonfiguration, bei der kein Drehmomentwandler vorgesehen ist, könnte zwar die vorgenannten Nachteile vermeiden, jedoch ist mit einer derartigen Konfiguration keine Dauerkriechfähigkeit realisierbar, die aber insbesondere bei Nutzfahrzeugen unbedingt erforderlich ist.

Der vorliegenden Erfindung liegt die Aufgabe zu Grunde, einen Hybridantrieb der eingangs beschriebenen Gattung vorzuschlagen, welcher neben geringem Bauraumbedarf und geringen Herstellungskosten sowie geringem Verbrauch zudem optimierte Anfahr- und Kriecheigenschaften aufweist.

Diese Aufgabe wird durch die Merkmale des Patentanspruches 1 gelöst, wobei sich aus den Unteransprüchen und den Zeichnungen vorteilhafte Ausgestaltungen ergeben.

Somit wird ein Hybridantriebsstrang als Hybridantrieb für ein Fahrzeug, insbesondere für ein Nutzfahrzeug oder dergleichen, vorzugsweise mit einem Lastschaltgetriebe ohne Drehmomentwandler vorgeschlagen, bei dem als nahezu verschleißfreies Anfahrelement ein Retarder vorgesehen ist, der mit dem Getriebe verbunden ist.

Auf diese Weise wird ein Antrieb mit einem hybridisierten Getriebe, zum Beispiel einem Lastschaltgetriebe mit einem Anfahr- und/oder Bremsretarder vorgeschlagen, mit dem eine Dauerkriechfähigkeit und verbesserte Anfahreigenschaft insbesondere für Nutzfahrzeuge realisiert werden kann, ohne dass der sonst üblicherweise vorgesehene hydrodynamische Drehmomentwandler erforderlich ist.

Mit dem vorgeschlagenen Hybridantrieb kann zudem zumindest zeitlich eine Drehmomentüberhöhung realisiert werden, so dass beim Anfahren des Fahrzeuges mehr als das maximale Verbrennungsmotormoment zur Verfügung steht. In vorteilhafter Weise steht dieses überhöhte Drehmoment aus dem Stillstand zur Verfügung und erlaubt zusätzlich das verschleißfreie Dauerkriechen, also eine länger andauernde Fortbewegung bei geringer Geschwindigkeit. Zudem kann der mit dem Getriebe verbundene Retarder als verschleißfreie Dauerbremse zum Beispiel bei langer Bergabfahrt genutzt werden.

Dadurch, dass auf den Drehmomentwandler verzichtet werden kann, ergibt sich nicht nur ein bezüglich seines Gewichtes besonders leichter, sondern auch kostengünstiger Antriebsstrang, der neben den Hybridfunktionen zusätzlich durch die Anbindung des Retarders als verschleißfreies Anfahrelement auch die Funktionen eines konventionellen Antriebsstranges realisieren kann.

Als verschleißfreies Anfahrelement kann sowohl ein hydrodynamischer Retarder oder auch ein elektrodynamischer Retarder, zum Beispiel als Wirbelstrombremse oder dergleichen, vorgesehen sein. Es ist auch möglich, dass neben dem vorgesehenen Retarder ein zusätzlicher Primärretarder eingesetzt wird, der dem Getriebe zum Beispiel vorgeschaltet ist. Dadurch können weitere Funktionen bei dem erfindungsgemäßen Hybridantrieb realisiert werden.

Nachfolgend wird die vorliegende Erfindung anhand der Zeichnungen weiter erläutert. Es zeigen:
Figur 1 eine schematische Ansicht einer möglichen Ausführungsvariante eines erfindungsgemäßen Hybridantriebes bei einem Fahrzeug; und
Figur 2 eine schematische Ansicht des Getriebes in Planetenbauweise mit einem integrierten Retarder als Anfahrelement.

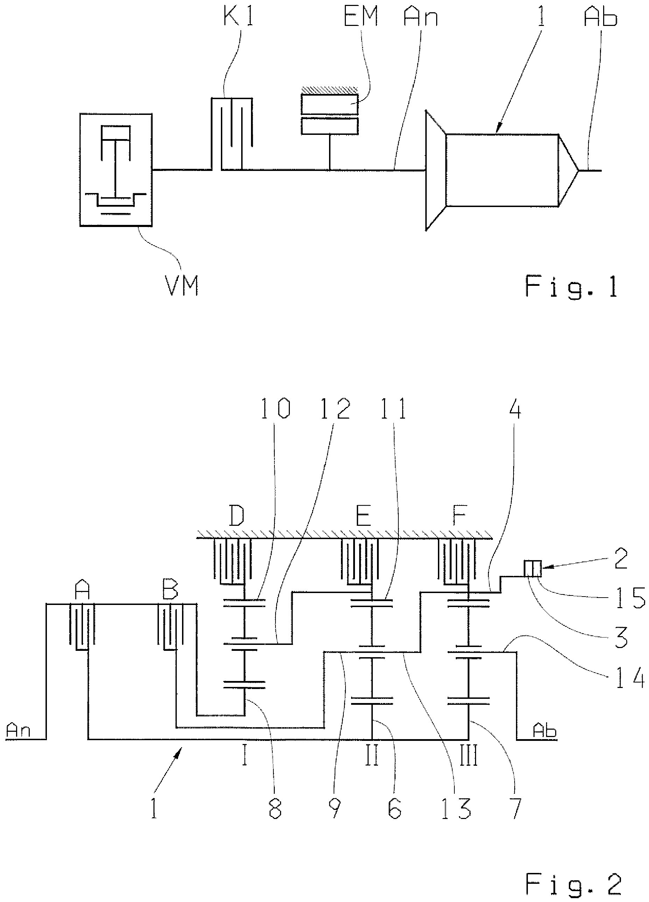

In Figur 1 ist beispielhaft eine schematische Ansicht eines als Hybridantrieb ausgeführten Antriebsstranges angedeutet, bei dem ein Verbrennungsmotor VM über eine Trennkupplung K1 mit einer Getriebeantriebswelle An eines in Planetenbauweise ausgeführten Getriebes 1 verbindbar ist, welches vorzugsweise als Mehrgang, zum Beispiel Sechsgang-Automatikgetriebe ausgeführt ist. Mit der Getriebeantriebswelle An ist auch zumindest eine elektrische Maschine verbunden, die als Motor zum elektrischen Fahren oder als Generator zum Beispiel zur Rekuperation einsetzbar ist.

Das Getriebe, welches in Figur 2 detaillierter dargestellt ist, umfasst beispielhaft drei Planetenradsätze bzw. Planetengetriebe I, 11, III, denen jeweils ein als Bremse D, E, F ausgeführtes Schaltelement zugeordnet ist. Ferner umfasst das Getriebe 1 zwei als Kupplungen A und B ausgeführte Schaltelemente. Die Kupplung A ist zum einen mit der Getriebeantriebswelle An und zum anderen mit dem Sonnenrad 6 des zweiten Planetenradsatzes II und mit dem Sonnenrad 7 des dritten Planetenradsatzes III verbunden. Die zweite Kupplung B ist zum einen mit der Getriebeantriebswelle An und dem Sonnenrad 8 des ersten Planetenradsatzes I und zum anderen mit dem Planetenradträger 9 des zweiten Planetenradsatzes II verbunden. Die Bremse D ist mit dem Hohlrad 10 des ersten Planetenradsatzes I verbunden, wobei die Bremse E mit dem Hohlrad 11 des zweiten Planetenradsatzes II und mit dem Planetenradträger 12 des ersten Planetenradsatzes I verbunden ist. Die Bremse F ist mit dem Hohlrad 4 des dritten Planetenradsatzes III und mit dem Planetenradträger 13 des zweiten Planetenradsatzes II verbunden. Der Planetenradträger 14 des dritten Planetenradsatzes III ist mit der Getriebeabtriebswelle Ab verbunden, wodurch der Abtrieb des Fahrzeuges realisiert wird.

Dem hybridisierten Lastschaltgetriebe ist zumindest ein Anfahr- und/oder Bremsretarder 2 für die Dauerkriechfähigkeit zugeordnet. Der Retarder 2 ist als hydrodynamisches Anfahrelement an dem Hohlrad 4 des dritten Planetenradsatzes III angebunden. Dazu ist das Hohlrad 4 mit dem Rotor 3 des Retarders 2 verbunden, wobei der Stator 15 in bekannterweise gehäusefest angeordnet ist. Somit ist der Retarder 2 bauraumsparend in das Getriebe 1 integriert.

Neben der Dauerkriechfähigkeit und den verbesserten Anfahreigenschaften durch den in das Getriebe 1 integrierten Retarder 2 ergibt sich zudem die Möglichkeit zumindest zeitweise eine Momentenüberhöhung durch entsprechende elektrische Unterstützung zu realisieren. Die Dauerkriechfähigkeit zum Beispiel im ersten Gang und analog im Rückwärtsgang kann dadurch dargestellt werden, dass die erste Kupplung A geschlossen ist und die dem dritten Planetenradsatz III zugeordnete Bremse F offen gehalten wird und der Retarder 2 mit Öl bzw. mit Druck beaufschlagt wird. Hierdurch wird ein Teil der Antriebsleistung im Retarder 2 in das Kühlsystem abgeführt und das Fahrzeug kriecht. Die Kriechgeschwindigkeit wird über die Motordrehzahl durch Schließen der Trennkupplung K1 und/oder durch Drehmomentsteuerung in dem Retarder 2 variiert. Parallel kann über die elektrische Maschine Energie erzeugt werden, welche zum Beispiel für eine dauerhafte Versorgung von elektrischen Nebenverbrauchern relevant ist.

Einen Übergang vom Kriechen zur normalen Fahrt kann dadurch realisiert werden, dass das Retardermoment weiter erhöht wird und das Hohlrad 4 abgebremst wird. Wenn die dem dritten Planetenradsatzes III zugeordnete Bremse F geschlossen wird, ist der erste Gang geschaltet und das Fahrzeug fährt mit fester Getriebe-übersetzung. Alternativ kann auch direkt aus der Funktion Kriechen in den zweiten Gang geschaltet werden. Der Ablauf stellt sich ähnlich einer Lastschaltung da, jedoch mit dem Unterschied, dass das abschaltende Element keine Kupplung sondern der Retarder 2 ist.

Es ist möglich, dass der Retarder 2 mit gekrümmten Schaufeln verbaut ist. Jedoch hat sich gezeigt, dass eine Dauerkriechfähigkeit auch im Rückwärtsgang in vollem Umfang dargestellt wird, wenn der Retarder 2 mit geraden, also nicht gekrümmten Schaufeln versehen wird, so dass sowohl für die Vorwärts- als auch für die Rückwärtsfahrt die gleichen Eigenschaften bereitgestellt werden. Alternativ kann für die Rückwärtsfahrt eine möglicherweise eingeschränkte Retarderleistung zumindest zeitweise durch Kriechen mit der elektrischen Maschine EM realisiert werden.

Unabhängig davon, ob ein zusätzlicher Primärretarder dem Getriebe 1 vorgeschaltet ist, kann der vorgesehene Anfahrretarder 2 beispielsweise bei den höheren Vorwärtsgängen, wie zum Beispiel dem vierten, fünften und sechsten Gang in gleicher Weise wie ein sonst verwendeter Primärretarder wirken. In den übrigen Gängen kann die Bremsfähigkeit durch den Retarder 2 vorzugsweise durch die elektrische Maschine EM zumindest kurzfristig kompensiert werden, so dass insgesamt neben der verbesserten Anfahr- und/oder Kriecheigenschaften auch die Eigenschaft des verschleißfreien Bremsens bei dem erfindungsgemäßen Hybridantrieb realisiert wird.

### Bezugszeichen

- VM: Verbrennungsmotor
- EM: elektrische Maschine
- K1: Trennkupplung
- An: Getriebeantriebswelle
- Ab: Getriebeabtriebswelle
- A: Kupplung
- B: Kupplung
- D: Bremse
- E: Bremse
- F: Bremse
- I: erster Planetenradsatz
- II: zweiter Planetenradsatz
- III: dritter Planetenradsatz
- 1: Getriebe
- 2: Retarder
- 3: Rotor des Retarders
- 4: Hohlrad des dritten Planetenradsatzes
- 5: Rotor der elektrischen Maschine
- 6: Sonnenrad des zweiten Planetenradsatzes
- 7: Sonnenrad des dritten Planetenradsatzes
- 8: Sonnenrad des ersten Planetenradsatzes
- 9: Planetenradträger des zweiten Planetenradsatzes
- 10: Hohlrad des ersten Planetenradsatzes
- 11: Hohlrad des zweiten Planetenradsatzes
- 12: Planetenradträger des ersten Planetenradsatzes
- 13: Planetenradträger des zweiten Planetenradsatzes
- 14: Planetenradträger des dritten Planetenradsatzes
- 15: Stator des Retarders

## Patentansprüche

1. Hybridantrieb für ein Fahrzeug, mit einem Verbrennungsmotor (VM) und zumindest einer elektrischen Maschine (EM) sowie einem Getriebe (1) in Planetenbauweise, **dadurch gekennzeichnet, dass** als verschleißfreies Anfahrelement zumindest ein Retarder (2) vorgesehen ist, der mit dem Getriebe (1) verbunden ist.

2. Hybridantrieb nach Anspruch 1, **dadurch gekennzeichnet, dass** der Retarder (2) in das Getriebe (1) integriert ist.

3. Hybridantrieb nach einem der vorangehenden Ansprüche, **dadurch gekennzeichnet, dass** ein hydrodynamischer Retarder (2) oder ein elektrodynamischer Retarder vorgesehen ist.

4. Hybridantrieb nach einem der vorangehenden Ansprüche, **dadurch gekennzeichnet, dass** ein zusätzlicher Primärretarder vorgesehen ist, der dem Getriebe (1) vorgeschaltet ist.

5. Hybridantrieb nach einem der vorangehenden Ansprüche, **dadurch gekennzeichnet, dass** das Getriebe (1) mehrere Planetenradsätze (I, 11, III) umfasst, wobei der Rotor (3) des Retarders (2) mit einem Hohlrad (4) der Planetenradsätze (I, II, III) des Getriebes (1) verbunden ist.

6. Hybridantrieb nach einem der vorangehenden Ansprüche, **dadurch gekennzeichnet, dass** die Kurbelwelle des Verbrennungsmotors (VM) über eine Trennkupplung (K1) mit einer Getriebeantriebswelle (An) verbindbar ist, an der ein Rotor (5) der elektrischen Maschine (EM) angebunden ist, wobei das Getriebe (1) drei Planetenradsätze (I, II, III) mit fünf Schaltelementen (A, B, D, E, F) umfasst, wobei der Rotor (3) des Retarders (2) mit dem Hohlrad (4) des dritten Planetenradsatzes (III) verbunden ist und wobei die Getriebeabtriebswelle (Ab) mit dem Planetenradträger (14) des dritten Planetenradsatzes (III) verbunden ist.

7. Hybridantrieb nach einem der vorangehenden Ansprüche, **dadurch gekennzeichnet, dass** zum Dauerkriechen im ersten Vorwärtsgang oder im Rückwärtsgang das als Kupplung (A) ausgebildete Schaltelement geschlossen ist und das als Bremse (F) ausgebildete Schaltelement offen ist, wobei der Retarder (2) mit Druck beaufschlagbar ist.

8. Hybridantrieb nach Anspruch 7, **dadurch gekennzeichnet, dass** die Kriechgeschwindigkeit über die Motordrehzahl und/oder über die Drehmomentsteuerung in dem Retarder (2) variierbar ist.

9. Hybridantrieb nach Anspruch 7 oder 8, **dadurch gekennzeichnet**, das zum Übergang vom Dauerkriechen zur Normalfahrt das Hohlrad (4) des dritten Planetenradsatzes (III) durch den Retarder (2) abbremsbar ist und das als Bremse (F) ausgebildete Schaltelement geschlossen wird.

10. Hybridantrieb nach einem der Ansprüche 7 bis 8, **dadurch gekennzeichnet, dass** zum Übergang vom Dauerkriechen zur Normalfahrt der zweite Vorwärtsgang geschaltet wird.

11. Hybridantrieb nach einem der Ansprüche 7 bis 9, **dadurch gekennzeichnet, dass** zumindest die Rotorschaufeln des Retarders (2) zum Dauerkriechen im Rückwärtsgang nicht gekrümmt ausgeführt sind.

12. Hybridantrieb nach einem der vorangehenden Ansprüche, **dadurch gekennzeichnet, dass** die elektrische Maschine (EM) zur Unterstützung der Bremswirkung des Retarders (2) verwendbar ist.
